# EUROPEAN PATENT APPLICATION

(11) **EP 4 621 908 A1**
(43) Date of publication of application: **24.09.2025**
(21) Application number: 23907708.4
(22) Date of filing: 20.12.2023
(51) Int. Cl.: H01M 10/0567, H01M 4/38, H01M 4/48, H01M 10/052, H01M 4/36, H01M 4/587

(54) **LITHIUM SECONDARY BATTERY**

(30) Priority: 22.12.2022 KR 20220182374
(71) Applicant: LG Energy Solution, Ltd., Seoul 07335 (KR)
(72) Inventor: OH, Young Ho, Daejeon 34122 (KR); AHN, Kyoung Ho, Daejeon 34122 (KR); LEE, Chul Haeng, Daejeon 34122 (KR); HAN, Jun Hyeok, Daejeon 34122 (KR); JEONG, You Kyeong, Daejeon 34122 (KR); KO, Yoon Seok, Daejeon 34122 (KR)
(74) Representative: Hoffmann Eitle
(86) International application number: PCT/KR2023/021044
(87) International publication number: WO 2024/136425

(57) **Abstract**

The present invention provides a lithium secondary battery comprising a negative electrode, a positive electrode, a separator, and a nonaqueous electrolyte, wherein the negative electrode includes a silicon-based active material, and the nonaqueous electrolyte includes a lithium salt, an organic solvent, and an additive containing a compound represented by a specific chemical formula.

## Description

### [Technical Field]

### Cross-Reference to Related Application

This application claims priority to and the benefit of Korean Patent Application No. 10-2022-0182374, filed on December 22, 2022, the entire contents of which are incorporated herein by reference.

### Technical Field

The present invention relates to a lithium secondary battery, and more particularly, to a lithium secondary battery that includes a non-aqueous electrolyte including an additive capable of forming a robust SEI layer on the positive/negative electrode, thereby suppressing an increase in initial resistance and improving output characteristics and lifetime performance.

### [Background Art]

With the growing dependence on electrical energy in our society along with the development of personal IT devices and computer networks in a developing information society, it is required to develop technologies to efficiently store and utilize electrical energy.

Among the developed technologies, secondary batteries are regarded as the most suitable for various purposes, and among secondary batteries, lithium secondary batteries are attracting great attention in that they can be miniaturized enough to be applied to personal IT devices and have the highest energy density.

Generally, lithium secondary batteries are manufactured by injecting a non-aqueous electrolyte into an electrode assembly, which is composed of a positive electrode, a negative electrode, and a porous separator, or impregnating the electrode assembly with a non-aqueous electrolyte.

As a positive electrode active materials of such lithium secondary batteries, the use of lithium-containing cobalt oxide, LiMnO₂ with a layered crystal structure, LiMn₂O₄ with a spinel crystal structure, lithium-containing nickel oxide (LiNiO₂), lithium nickel-cobalt-manganese transition metal oxides, and the like is being considered.

Meanwhile, as negative electrode active materials, carbon-based active materials such as graphite have been used, but recently, the use of silicon-based active materials is being considered due to having higher capacity than carbon-based active materials.

The silicon-based active material has high capacity, but there is a problem that the volume expansion/contraction is very large during the charging and discharging process. Such large volume expansion/contraction significantly reduces the conductivity of the negative electrode, causing a decrease in lifetime performance. During initial activation, a solid electrolyte interphase layer (hereinafter SEI layer) is formed on the surface of the negative electrode, but the silicon-based active material has a great deal of volume expansion, which causes cracks in the SEI layer and the continuous generation of negative electrode surfaces, and thus electrolyte side reactions are accelerated as the SEI layer formation reaction continuously occurs, and resistance is increased as the SEI layer becomes thicker.

### [Disclosure]

### [Technical Problem]

The present invention was devised to solve the problems and is directed to providing a lithium secondary battery, which includes a silicon-based active material as a negative electrode active material, with improved output characteristics and lifetime characteristics by forming a robust and low-resistance SEI layer on the negative electrode.

### [Technical Solution]

The present invention provides a lithium secondary battery including a negative electrode, a positive electrode, a separator, and a non-aqueous electrolyte, wherein the negative electrode includes a negative electrode active material, which includes a silicon-based active material, the non-aqueous electrolyte includes a lithium salt, an organic solvent, and an additive, and the additive includes a compound represented by Chemical Formula 1 below.

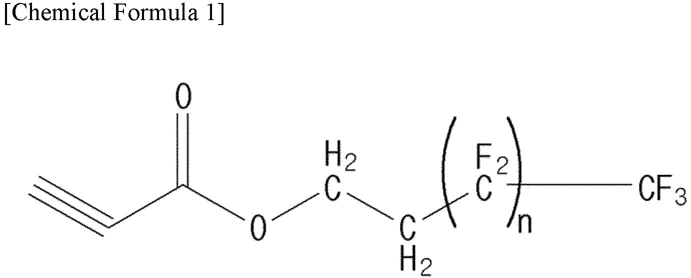

In Chemical Formula 1, n is an integer from 0 to 18.

### [Advantageous Effects]

The present invention relates to a lithium secondary battery including a silicon-based active material in a negative electrode and a compound represented by Chemical Formula 1 as an additive in a non-aqueous electrolyte. Since the compound represented by Chemical Formula 1 contains a propargyl group (-C≡C-) and a fluorine-substituted alkyl group in its structure, the compound can be reduced prior to an organic solvent and form a low-resistance SEI layer including a fluorocarbon component on a negative electrode surface. Since the SEI layer formed on the negative electrode by the compound represented by Chemical Formula 1 is robust and has low resistance, it is possible to prevent the SEI layer from cracking due to the volume expansion of the silicon-based active material, and due to low resistance, the lithium secondary battery can have improved lifetime characteristics and output characteristics (specifically, output characteristics at room temperature and output characteristics at low temperatures).

### [Modes of the Invention]

Before describing the present invention, terms and words used in this specification and claims should not be construed as limited to their conventional or dictionary meanings but should be construed as a meaning and concept consistent with the technical idea of the present invention based on the principle that the inventors can properly define the concept of terms in order to describe their invention in the best way.

The terms used herein are only used to describe exemplary embodiments and are not intended to limit the present invention. Singular expressions include plural expressions unless the context clearly indicates otherwise.

In this specification, the term "include," "provide," or "have" is intended to designate the presence of the implemented features, numbers, steps, elements, or combinations thereof, and it should be understood that it does not exclude in advance the presence or addition of other features, numbers, steps, elements, or combinations thereof.

In this specification, "%" means percent by weight unless explicitly stated otherwise.

Before describing the present invention, in the description of "Cₐ to C_{b}" herein, "a" and "b" are the number of carbon atoms contained in a particular functional group. In other words, the functional group may contain "a" to "b" carbon atoms.

In this specification, unless otherwise defined, the term "substitution" means that at least one hydrogen bonded to carbon is substituted with an element other than hydrogen, for example, with a C₁ to C₅ alkyl group or a fluorine atom.

In this specification, the average particle diameter (D₅₀) may be defined as the particle size corresponding to 50% of the cumulative volume in the particle size distribution curve. The average particle diameter (D₅₀) may be measured, for example, using a laser diffraction method. The laser diffraction method is generally used to measure particle diameters from the submicron region to several millimeters, and results with high reproducibility and high resolution can be obtained.

Hereinafter, the present invention will be described in detail.

### Lithium secondary battery

The present invention provides a lithium secondary battery, which includes a negative electrode, a positive electrode, a separator, and a non-aqueous electrolyte, wherein the negative electrode includes a negative electrode active material, which includes a silicon-based active material, the non-aqueous electrolyte includes a lithium salt, an organic solvent, and an additive, and the additive includes a compound represented by Chemical Formula 1 below.

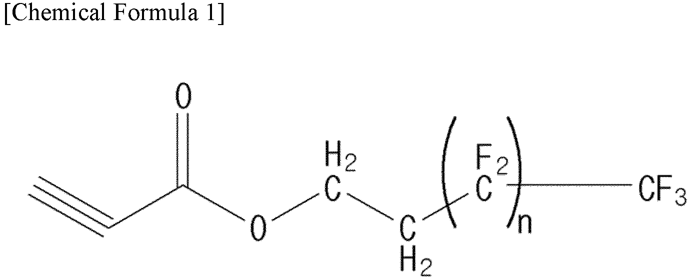

In Chemical Formula 1, n is an integer from 0 to 18.

The present invention relates to a lithium secondary battery, which includes a silicon-based active material in a negative electrode and the compound represented by Chemical Formula 1 as an additive in a non-aqueous electrolyte. Since the compound represented by Chemical Formula 1 contains a propargyl group (-C≡C-) and a fluorine-substituted alkyl group in its structure, the compound may be reduced prior to an organic solvent and form a low-resistance SEI layer including a fluorocarbon component on a negative electrode surface. Since the SEI layer formed on the negative electrode by the compound represented by Chemical Formula 1 is robust and has low resistance, it is possible to prevent the SEI layer from cracking due to the volume expansion of the silicon-based active material, and due to low resistance, the lithium secondary battery may have improved lifetime characteristics and output characteristics (specifically, output characteristics at room temperature and output characteristics at low temperatures).

The lithium secondary battery includes: a negative electrode; a positive electrode; a separator; and a non-aqueous electrolyte. Specifically, the lithium secondary battery includes: a negative electrode; a positive electrode opposite the negative electrode; a separator interposed between the negative electrode and the positive electrode; and a non-aqueous electrolyte. The lithium secondary battery may be manufactured by accommodating an electrode assembly, which includes: the negative electrode; the positive electrode opposite the negative electrode; and the separator interposed between the negative electrode and the positive electrode, in a battery case and then injecting the non-aqueous electrolyte.

### (1) Negative electrode

The negative electrode includes a negative electrode active material.

The negative electrode active material includes a silicon-based active material. The silicon-based active material has higher capacity than the carbon-based active material, but there is a problem in that the volume expansion/contraction according to the charging and discharging process is very large. However, when the silicon-based active material is used with the non-aqueous electrolyte described later, a robust and low-resistance SEI layer may be formed on the negative electrode, and thus it is possible to prevent electrolyte side reactions and realize a lithium secondary battery with improved lifetime performance and output characteristics.

The silicon-based active material may include a compound represented by Chemical Formula A below.

[Chemical Formula A] SiOx (0 ≤ x < 2)

In Chemical Formula A, considering that lithium cannot be stored because SiO₂ does not react with lithium ions, x is preferably within the above range. Specifically, in Chemical Formula A, x may be 0.5 to 1.5. More specifically, the silicon-based active material may be SiO.

The silicon-based active material may have an average particle diameter (D₅₀) of 1 µm to 20 µm, and preferably 3 µm to 10 µm, in order to ensure the structural stability of the active material during charging and discharging, smoothly form a conductive network for maintaining electrical conductivity, and allow better accessibility to the binder for bonding the active material and the current collector.

The negative electrode active material may further include a carbon-based active material with the silicon-based active material. When the silicon-based active material is used with the carbon-based active material, it is possible to maintain high energy density and high capacity and prevent a reduction in lifetime performance.

The carbon-based active material may include at least one selected from the group consisting of graphite, hard carbon, soft carbon, carbon black, graphene, and fibrous carbon, and may specifically include graphite. For example, the graphite may include at least one selected from the group consisting of artificial graphite and natural graphite.

The carbon-based active material may have an average particle diameter (D₅₀) of 5 µm to 35 µm, and preferably 10 µm to 20 µm in order to ensure structural stability during charging and discharging and reduce side reactions with the electrolyte.

When the negative electrode active material further includes a carbon-based active material along with the silicon-based active material, the weight ratio of the silicon-based active material and the carbon-based active material may be 1:99 to 30:70, and specifically 5:95 to 20:80. Within the above range, it is possible to ensure sufficient capacity of the negative electrode while reducing the effect of the volume expansion of the silicon-based active material and implement a negative electrode with high loading.

The negative electrode may include a negative electrode current collector and a negative electrode active material layer disposed on at least one side of the negative electrode current collector. The negative electrode active material may be included in the negative electrode active material layer.

The negative electrode current collector is not particularly limited as long as it has high conductivity without causing chemical changes on the battery. Specifically, the negative electrode current collector may be copper, stainless steel, aluminum, nickel, titanium, calcined carbon, copper or stainless steel whose surface is treated with carbon, nickel, titanium, silver, and the like, aluminum-cadmium alloys, and the like.

The negative electrode current collector may typically have a thickness of 3 to 500 µm.

The negative electrode current collector may have fine irregularities formed on its surface to strengthen the bonding force of the negative electrode active material. For example, the negative electrode current collector may be used in various forms such as films, sheets, foils, nets, porous materials, foams, and non-woven materials.

The negative electrode active material layer may be disposed on at least one side of the negative electrode current collector. Specifically, the negative electrode active material layer may be disposed on one or both sides of the negative electrode current collector.

The negative electrode active material may be included in the negative electrode active material layer in an amount of 60 wt% to 99 wt%, and preferably 80 wt% to 97 wt%.

The negative electrode active material layer may further include a conductive material, a binder, and/or a thickener along with the negative electrode active material.

The binder may be used to improve the adhesion between the negative electrode active material layer and the negative electrode current collector, which will be described later, or improve the binding force between the silicon-based active materials.

In order to further improve electrode adhesion and provide sufficient resistance to the volume expansion/contraction of the active material, the binder may include at least one selected from the group consisting of polyvinylidene fluoride (PVdF), styrene butadiene rubber (SBR), acrylonitrile butadiene rubber, acrylic rubber, butyl rubber, fluororubber, polyvinyl alcohol, carboxymethyl cellulose (CMC), starch, hydroxypropyl cellulose, regenerated cellulose, polyvinyl alcohol (PVA), polyacrylic acid (PAA), polyethylene glycol (PEG), polyacrylonitrile (PAN), and polyacryl amide (PAM), and may specifically include styrene butadiene rubber (SBR).

The binder may be included in the negative electrode active material layer in an amount of 0.1 wt% to 10 wt%. When the binder content is within the above range, it is preferable because it is possible to implement a negative electrode with excellent capacity along with the effect of improving adhesion and controlling the thickness expansion of the negative electrode.

The conductive material may be used to assist and improve conductivity in the secondary battery and is not particularly limited as long as it has conductivity without causing chemical changes. Specifically, the conductive material may include at least one selected from the group consisting of graphite including natural graphite or artificial graphite; carbon black including acetylene black, ketjen black, channel black, furnace black, lamp black, and thermal black; conductive fibers including carbon fiber and metal fiber; conductive tubes including carbon nanotubes; fluorocarbon; metal powders including aluminum and nickel powders; conductive whiskers including zinc oxide and potassium titanate; conductive metal oxides including titanium oxide; and polyphenylene derivatives, and may preferably include carbon black in order to achieve high conductivity.

The conductive material may be included in the negative electrode active material layer in an amount of 1 wt% to 20 wt%, and when the conductive material content is within the above range, it is preferable because it is possible to reduce an increase in resistance due to the binder and form an excellent conductive network.

The negative electrode active material layer may further include a thickener. The thickener may include carboxymethylcellulose (CMC).

The thickener may be included in the negative electrode active material layer in an amount of 0.5 wt% to 5 wt% but is not limited thereto.

The thickness of the negative electrode active material layer may be 10 µm to 300 µm, and preferably 50 µm to 200 µm, in order to achieve high energy density.

The negative electrode may be manufactured by coating the negative electrode current collector with a negative electrode slurry including a negative electrode active material and optionally a binder, a conductive material, and a solvent for forming a negative electrode slurry, followed by drying and rolling.

The solvent for forming a negative electrode slurry may include, for example, at least one selected from the group consisting of distilled water, ethanol, methanol, and isopropyl alcohol in order to easily disperse the negative electrode active material, the binder, and/or the conductive material, with distilled water being preferred.

Considering the viscosity, coating properties, and dispersibility of the negative electrode slurry, the solvent for forming a negative electrode slurry may be included in the negative electrode slurry so that the solid content including the negative electrode active material, and optionally the binder and the conductive material is 15 wt% to 45 wt%.

### (2) Positive electrode

The positive electrode includes a positive electrode active material.

The positive electrode active material is a compound capable of reversibly intercalating/deintercalating lithium ions and may specifically include a lithium transition metal composite oxide including at least one transition metal selected from a group consisting of nickel, cobalt, manganese, and aluminum and lithium, with a lithium transition metal composite oxide including a transition metal including nickel, cobalt, and manganese and lithium being preferred.

For example, the lithium transition metal composite oxide may be a lithium-manganese-based oxide (such as LiMnO₂ and LiMn₂O₄), a lithium-cobalt-based oxide (such as LiCoO₂), a lithium-nickel-based oxide (such as LiNiO₂), a lithium-nickel-manganese-based oxide (such as LiNi_{1-Y}Mn_{Y}O₂ (where 0<Y<1) and LiMn_{2-z}Ni_{z}O₄ (where 0 < Z < 2)), a lithium-nickel-cobalt-based oxide (such as LiNi_{1-Y1}Co_{Y1}O₂ (where 0<Y1<1)), a lithium-manganese-cobalt-based oxide (such as LiCo_{1-Y2}Mn_{Y2}O₂ (where 0<Y2<1) and LiMn_{2-z1}Co_{z1}O₄ (where 0 < Z1 < 2)), a lithium-nickel-manganese-cobalt-based oxide (such as Li(NiₚCo_{q}Mnᵣ₁)O₂ (where 0 < p < 1, 0 < q < 1, 0 < r1 < 1, p+q+r1=1) or Li(Niₚ₁Co_{q1}Mnᵣ₂)O₄ (where 0 < p1 < 2, 0 < q1 < 2, 0 < r2 < 2, p1+q1+r2=2)), or a lithium-nickel-cobalt-transition metal (M) oxide (such as Li(Niₚ₂Co_{q2}Mnᵣ₃M_{S2})O₂ (where, M is selected from the group consisting of Al, Fe, V, Cr, Ti, Ta, Mg, and Mo, and p2, q2, r3, and s2 are atomic fractions of each independent element, 0 < p2 < 1, 0 < q2 < 1, 0 < r3 < 1, 0 < s2 < 1, p2+q2+r3+s2=1)), and any one or more compounds thereof may be included. Given that the capacity characteristics and stability of the battery may be improved, the lithium transition metal composite oxide may be LiCoO₂, LiMnO₂, LiNiO₂, a lithium nickel-manganese-cobalt oxide (such as Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, or Li(Ni_{0.8}Mn_{0.1}Co_{0.1})O₂), or a lithium nickel cobalt aluminum oxide (such as Li(Ni_{0.8}Co_{0.15}Al_{0.05})O₂), and considering the remarkable improvement effect according to the type and content ratio of the components forming the lithium transition metal composite oxide, the lithium transition metal composite oxide may be Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, or Li(Ni_{0.8}Mn_{0.1}Co_{0.1})O₂, and any one or a mixture of two or more thereof may be used.

More specifically, the positive electrode active material is a lithium transition metal composite oxide and may include 60 mol% or more of nickel based on the total number of moles of the transition metals included in the lithium transition metal composite oxide. Specifically, the positive electrode active material is a lithium transition metal composite oxide, and the transition metal includes nickel and at least one selected from manganese, cobalt, and aluminum, and may include 60 mol% or more, and specifically 60 mol% to 90 mol%, of nickel based on the total number of moles of the transition metals. When this lithium transition metal composite oxide with a high nickel content is used with the above-described non-aqueous electrolyte, it is preferable in that by-products in the gas generated by structural collapse may be reduced.

The positive electrode active material may include a lithium transition metal composite oxide represented by Chemical Formula B below.

[Chemical Formula B] Li₁₊ₓ(NiₐCo_{b}Mn_{c}M_{d})O₂

In Chemical Formula B, M is one or more selected from W, Cu, Fe, V, Cr, Ti, Zr, Zn, Al, In, Ta, Y, La, Sr, Ga, Sc, Gd, Sm, Ca, Ce, Nb, Mg, B, and Mo, and 1+x, a, b, c, and d are atomic fractions of each independent element, and 0≤x≤0.2, 0.50≤a<1, 0<b≤0.25, 0<c≤0.25, 0≤d≤0.1, a+b+c+d=1.

Preferably, a, b, c, and d may satisfy 0.70≤a≤0.95, 0.025≤b≤0.20, 0.025≤c≤0.20, and 0≤d≤0.05, respectively.

In addition, a, b, c, and d may satisfy 0.80≤a≤0.95, 0.025≤b≤0.15, 0.025≤c≤0.15, and 0≤d≤0.05, respectively.

In addition, a, b, c, and d may satisfy 0.85≤a≤0.90, 0.05≤b≤0.10, 0.05≤c≤0.10, and 0≤d≤0.03, respectively.

The positive electrode may include: a positive electrode current collector; and a positive electrode active material layer disposed on at least one side of the positive electrode current collector. The positive electrode active material layer may include the above-described positive electrode active material.

The positive electrode current collector may typically have a thickness of 3 to 500 µm.

The positive electrode current collector may have fine irregularities formed on its surface to strengthen the bonding force of the positive electrode active material. For example, the positive electrode current collector may be used in various forms such as films, sheets, foils, nets, porous materials, foams, and non-woven materials.

The positive electrode active material layer may be disposed on at least one side of the positive electrode current collector. Specifically, the positive electrode active material layer may be disposed on one or both sides of the positive electrode current collector.

The positive electrode active material may be included in the positive electrode active material layer in an amount of 80 wt% to 99 wt% in consideration of exhibiting sufficient capacity of the positive electrode active material.

The positive electrode active material layer may further include a binder and/or a conductive material along with the positive electrode active material described above.

The binder is a component that helps in the binding of the active material and the conductive material and the binding of the current collector and may specifically include at least one selected from the group consisting of polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber, and fluororubber, with polyvinylidene fluoride being preferred.

The binder may be included in the positive electrode active material layer in an amount of 0.1 wt% to 20 wt% in order to ensure a sufficient binding force between components including the positive electrode active material.

The conductive material may be used to assist and improve conductivity in secondary batteries and is not particularly limited as long as it has conductivity without causing chemical changes. Specifically, the positive electrode conductive material may include at least one selected from the group consisting of: graphite including natural graphite or artificial graphite; carbon black including acetylene black, ketjen black, channel black, furnace black, lamp black, and thermal black; conductive fibers including carbon fiber and metal fiber; conductive tubes including carbon nanotube; fluorocarbon; metal powders including aluminum and nickel powders; conductive whiskers including zinc oxide and potassium titanate; conductive metal oxides including titanium oxide; and polyphenylene derivatives, with carbon nanotube being preferred in order to improve conductivity.

The conductive material may be included in the positive electrode active material layer in an amount of 0.1 wt% to 20 wt% in order to ensure sufficient electrical conductivity.

The positive electrode active material layer may have a thickness of 10 µm to 300 µm, and preferably 40 µm to 150 µm.

The positive electrode may be manufactured by coating the positive electrode current collector with a positive electrode slurry including a positive electrode active material and optionally a binder, a conductive material, and a solvent for forming a positive electrode slurry, followed by drying and rolling.

The solvent for forming a positive electrode slurry may include an organic solvent such as N-methyl-2-pyrrolidone (NMP). The solid content of the positive electrode slurry may be 40 wt% to 90 wt%, and specifically 50 wt% to 80 wt%.

### (3) Separator

The separator may be interposed between the positive electrode and the negative electrode.

The separator may include typical porous polymer films conventionally used as a separator, and for example, porous polymer films prepared by polyolefin-based polymers such as an ethylene homopolymer, propylene homopolymer, ethylene/butene copolymer, ethylene/hexene copolymer, and ethylene/methacrylate copolymer, and the like may be used, either alone or by laminating them, or commonly used porous non-woven materials such as non-woven materials made of high melting point glass fibers and polyethylene terephthalate fibers, and the like may be used but is not limited thereto. In addition, in order to ensure heat resistance or mechanical strength, a coated separator containing ceramic components or polymers may be used, and optionally a single-layer or multi-layer structure may be used.

### (4) Non-aqueous electrolyte

### 1) Lithium salt

The lithium salt is explained as follows.

In an non-aqueous electrolyte for a lithium secondary battery according to an embodiment of the present invention, the lithium salt may be those commonly used in electrolytes for lithium secondary batteries without limitation, and for example, the lithium salt may include Li⁺ as a cation and include at least one selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, B₁₀Cl₁₀⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, CH₃SO₃⁻, CF₃(CF₂)₇SO₃⁻, CF₃CO₂⁻, CH₃CO₂⁻, SCN⁻, and (CF₃CF₂SO₂)₂N⁻ as an anion. Specifically, the lithium salt includes at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiBOB (LiB(C₂O₄)₂), LiCF₃SO₃, LiTFSI (LiN(SO₂CF₃)₂), LiFSI (LiN(SO₂F)₂), LiCH₃SO₃, LiCF₃CO₂, LiCH₃CO₂, and LiBETI (LiN(SO₂CF₂CF₃)₂). The lithium salt may specifically include a single substance or a mixture of two or more selected from the group consisting of LiBF₄, LiClO₄, LiPF₆, LiBOB (LiB(C₂O₄)₂), LiCF₃SO₃, LiTFSI (LiN(SO₂CF₃)₂), LiFSI (LiN(SO₂F)₂), and LiBETI (LiN(SO₂CF₂CF₃)₂) and more specifically include LiPF₆.

The lithium salt may be appropriately changed within the commonly used range, but in order to obtain the optimal effect of forming an anti-corrosion film on the surface of the electrode, the lithium salt may be included in the electrolyte at a concentration of 0.8 M to 3.0 M, and specifically at a concentration of 1.0 M to 3.0 M.

When the lithium salt concentration satisfies the above range, the viscosity of the non-aqueous electrolyte may be controlled to achieve optimal impregnation, and the capacity characteristics and cycle characteristics of the lithium secondary battery may be improved by increasing the mobility of lithium ions.

### 2) Organic solvent

The organic solvent is a non-aqueous solvent commonly used in lithium secondary batteries and is not particularly limited as long as it can minimize decomposition due to oxidation during the charging and discharging of secondary batteries.

Specifically, the organic solvent may include a cyclic carbonate-based organic solvent and a linear carbonate-based organic solvent.

The cyclic carbonate-based organic solvent is a high-viscosity organic solvent that may easily dissociate lithium salts in an electrolyte due to its high dielectric constant, and may specifically include at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and more specifically include ethylene carbonate.

The linear carbonate-based organic solvent is an organic solvent with low viscosity and a low dielectric constant and may specifically include at least one selected from the group consisting of dimethyl carbonate (DMC), diethyl carbonate (DEC), dipropyl carbonate, ethyl methyl carbonate (EMC), methyl propyl carbonate, and ethyl propyl carbonate.

The organic solvent may be a mixture of a cyclic carbonate-based organic solvent and a linear carbonate-based organic solvent. The cyclic carbonate-based organic solvent and the linear carbonate-based organic solvent may be mixed at a volume ratio of 10:90 to 50:50, and specifically 15:85 to 40:60.

The organic solvent may be used by adding organic solvents commonly used in a non-aqueous electrolyte without limitation. For example, the organic solvent may further include at least one organic solvent of an ester-based organic solvent, an ether-based organic solvent, a glyme-based organic solvent, and a nitrile-based organic solvent.

The ester-based organic solvent may include at least one selected from the group consisting of methyl acetate, ethyl acetate, propyl acetate, methyl propionate, ethyl propionate, propyl propionate, butyl propionate, γ-butyrolactone, γ-valerolactone, γ-caprolactone, σ-valerolactone, and ε-caprolactone.

The ether-based solvent may include any one selected from the group consisting of dimethyl ether, diethyl ether, dipropyl ether, methyl ethyl ether, methyl propyl ether, ethyl propyl ether, 1,3-dioxolane (DOL), and 2,2-bis(trifluoromethyl)-1,3-dioxolane (TFDOL) or a mixture of two or more thereof, but is not limited thereto.

The glyme-based solvent has a high dielectric constant and low surface tension compared to linear carbonate-based organic solvents, and its reactivity with metals is low, and the glyme-based solvent may include at least one selected from the group consisting of dimethoxyethane (glyme, DME), diethoxyethane, digylme, tri-glyme, and tetra-glyme (TEGDME), but is not limited thereto.

The nitrile-based solvent may be one or more selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile but is not limited thereto.

The remainder of the non-aqueous electrolyte excluding a lithium salt and an additive may be an organic solvent unless otherwise specified.

### (3) Additives

The non-aqueous electrolyte of the present invention includes an additive.

The additive includes a compound represented by Chemical Formula 1.

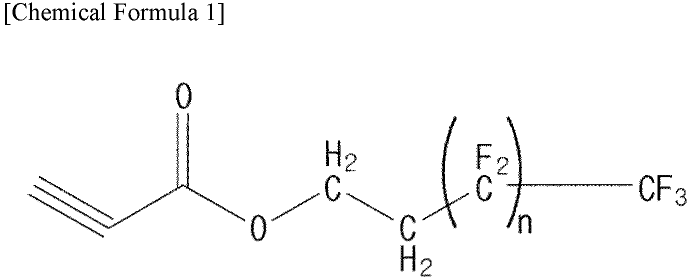

In Chemical Formula 1, n is an integer from 0 to 18.

Specifically, since the compound represented by Chemical Formula 1 includes a propargyl functional group in its structure, the compound may be easily reduced and decomposed on the surface of the negative electrode including a silicon-based active material to form an SEI layer with low resistance and high passivation ability. Therefore, when a non-aqueous electrolyte including the compound represented by Chemical Formula 1 as an additive of the electrolyte is used, it is possible to prevent self-discharge of the negative electrode due to additional reduction decomposition of the electrolyte caused by instability of the SEI layer.

Since the compound represented by Chemical Formula 1 includes an alkyl group substituted with a fluorine atom at the end of its structure, an oxidation-resistant film is formed on the positive electrode surface, suppressing the elution of transition metals from the positive electrode, and thus the electrodeposition and precipitation of eluted transition metals on the negative electrode are suppressed, and consequently, an internal short circuit may be prevented. In addition, the alkyl group substituted with the fluorine atom, which has excellent flame retardancy and incombustibility, in the molecular structure may play a role in removing radicals caused by the fluorine atom from the surface of the positive electrode and form a passivation film that may secure excellent oxidation resistance. As a result, side reactions between the electrode and the electrolyte are controlled, making it possible to provide a lithium secondary battery with improved lifetime characteristics at room temperature and low temperatures.

Since the compound represented by Chemical Formula 1 of the present invention contains an ethylene group (-CH₂-CH₂-) between the acrylate functional group and the terminal fluorine-substituted alkyl group, the flexibility of the compound is increased due to the increased molecular chain in the linking group compared to a compound containing a methylene group (-CH₂-) between the acrylate functional group and the terminal fluorine-substituted alkyl group. As a result, a film derived from the compound may have further improved durability on the surface of the negative electrode.

Since the compound represented by Chemical Formula 1 contains two oxygen atoms in its molecular structure, oxidation stability may be enhanced and high-voltage stability may be improved compared to a compound including three or more oxygen atoms, and thus the durability of the electrolyte may be improved.

Since the compound represented by Chemical Formula 1 includes a fluorine-containing alkyl group with excellent flame retardancy and incombustibility and a propargyl group, a robust SEI layer with low resistance is formed on the negative electrode, which not only suppresses the additional reduction decomposition reaction of the electrolyte, but also prevents the self-discharge of the negative electrode, and thus it is possible to improve lifetime performance, suppress an increase in initial resistance, and provide a lithium secondary battery with improved output characteristics at room temperature and low temperatures.

In Chemical Formula 1, n is an integer from 0 to 18, specifically from 1 to 10, more specifically from 2 to 8.

When n satisfies the above range, the thermal properties of the compound itself may be improved, and the film formed therefrom is expected to be stable. In Chemical Formula 1, when n exceeds 18, as viscosity and non-polarity increase as an excess amount of the fluorine atom is contained, because solubility in the electrolyte decreases, ionic conductivity decreases, resulting in poor battery performance.

Preferably, the compound represented by Chemical Formula 1 may include at least one selected from the group consisting of compounds represented by Chemical Formulas 1-1 to 1-4 below and more preferably include at least one selected from the group consisting of compounds represented by Chemical Formula 1-1 and Chemical Formula 1-2.

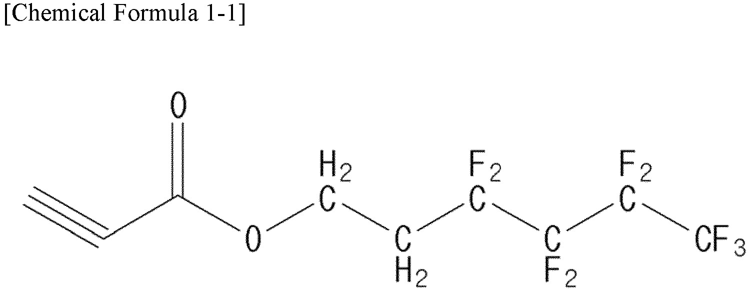

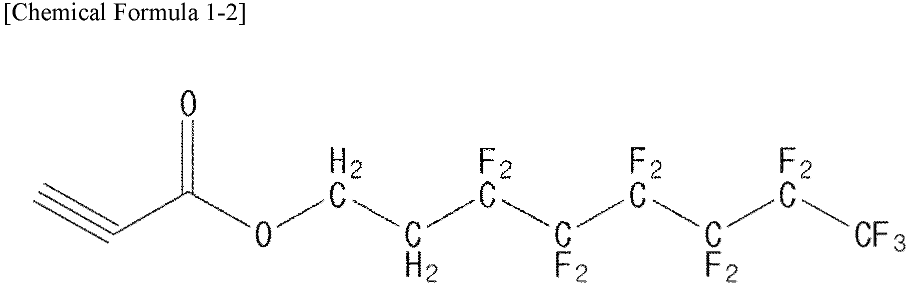

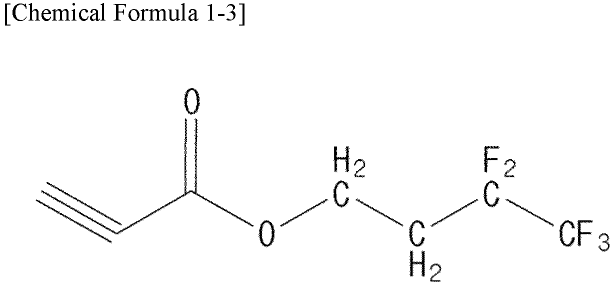

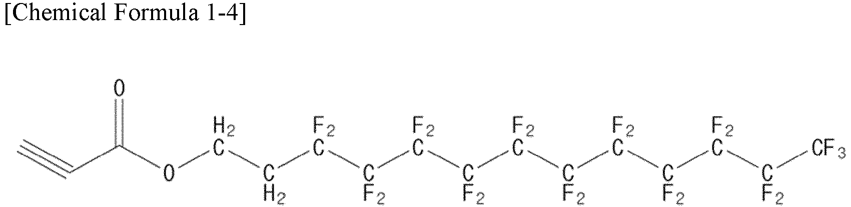

The compound represented by Chemical Formula 1 may be included in the non-aqueous electrolyte in an amount of 0.05 wt% to 8 wt%.

When the content of the compound represented by Chemical Formula 1 is within the above range, a low-resistance SEI layer is formed on the surface of the negative electrode to improve the lithium movement effect within the film, and the additional reduction decomposition reaction of the electrolyte is suppressed to prevent self-discharge of the negative electrode, while reducing disadvantages such as side reactions caused by an additive, capacity reduction, and increasing resistance.

Specifically, when the content of the compound represented by Chemical Formula 1 is 0.05 wt% or more, a stable film may be formed during operation of the battery and a low-resistance SEI layer may be formed on the surface of the negative electrode to improve output performance of the battery. **In** addition, when the content of the compound represented by Chemical Formula 1 is 8 wt% or less, the viscosity of the non-aqueous electrolyte may be controlled to achieve optimal impregnation, the increase in battery resistance due to decomposition of the additive may be effectively suppressed, and thus ionic conductivity in the battery may be further increased and a reduction in output characteristics may be prevented.

Specifically, the compound represented by Chemical Formula 1 may be included in the non-aqueous electrolyte in an amount of 0.1 wt% to 5 wt%, and more specifically, 0.3 wt% to 3 wt%.

The additive may further include, if necessary, other additional additives in addition to the compound represented by Chemical Formula 1 in order to prevent the non-aqueous electrolyte from decomposing and causing negative electrode collapse in high power conditions, improve low-temperature high-rate discharge characteristics and stability at high temperatures, prevent overcharging, and further improve the effect of reducing battery expansion at high temperatures.

The additional additive may be, for example, at least one selected from the group consisting of a cyclic carbonate-based compound, a halogen-substituted carbonate-based compound, a sultone-based compound, a sulfate-based compound, a phosphate-based or phosphite-based compound, a borate-based compound, a nitrile-based compound, a benzene-based compound, an amine-based compound, a silane-based compound, and a lithium salt-based compound.

The cyclic carbonate-based compound may be, for example, vinylene carbonate (VC) or vinylethylene carbonate.

The halogen-substituted carbonate-based compound may be, for example, fluoroethylene carbonate (FEC).

The sultone-based compound may be, for example, at least one compound selected from the group consisting of 1,3-propane sultone (PS), 1,4-butane sultone, ethene sultone, 1,3-propene sultone (PRS), 1,4-butene sultone, and 1-methyl-1,3-propene sultone.

The sulfate-based compound may be, for example, ethylene sulfate (Esa), trimethylene sulfate (TMS), or methyl trimethylene sulfate (MTMS).

The phosphate-based or phosphite-based compound may be, for example, at least one compound selected from the group consisting of lithium difluoro(bisoxalato)phosphate, lithium difluorophosphate, tris(trimethylsilyl) phosphate, tris(trimethylsilyl) phosphite, tris(2,2,2-trifluoroethyl) phosphate, and tris(trifluoroethyl) phosphite.

The borate-based compound may be tetraphenylborate, lithium difluoro(oxalato)borate (LiODFB), or lithium bisoxalatoborate (LiB(C₂O₄)₂, LiBOB).

The nitrile-based compound may be, for example, at least one compound selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may be, for example, fluorobenzene, and the amine-based compound may be triethanolamine or ethylenediamine, and the silane-based compound may be tetravinylsilane.

The lithium salt-based compound is a compound different from the lithium salt included in the non-aqueous electrolyte and may be lithium difluorophosphate (LiPO₂F₂) or LiBF₄.

Among these additional additives, when at least one selected from the group consisting of vinylene carbonate, vinylethylene carbonate, 1,3-propane sultone, fluoroethylene carbonate, ethylene sulfate, succinonitrile, and lithium difluoro(oxalato)borate, and specifically at least one selected from the group consisting of vinylene carbonate, 1,3-propane sultone, and ethylene sulfate, is used, a more robust SEI layer may be formed on the surface of the negative electrode during the initial activation of the secondary battery.

A combination with two or more compounds may be used as the additional additive, and the total content of the compound represented by Chemical Formula 1 and the additional additive may be 50 wt% or less, specifically 0.05 to 20 wt%, and more specifically 0.05 to 10 wt% based on the total weight of the non-aqueous electrolyte. When the total content of the additives satisfies the above range, the low-temperature output characteristics of the battery may be improved, the storage characteristics at high temperatures and the lifetime characteristics at high temperatures may be more effectively improved, and side reactions caused by the additives remaining after the reaction in the battery may be prevented.

The lithium secondary battery according to the present invention described above may be useful in portable devices, such as mobile phones, laptop computers, and digital cameras, and electric vehicles such as hybrid electric vehicles (HEVs).

According to another embodiment of the present invention, a battery module including the lithium secondary battery as a unit cell and a battery pack including the same are provided.

The battery module or the battery pack may be used as a power source for one or more mid- to large-sized devices among power tools, electric vehicles (EVs) including hybrid electric vehicles, plug-in hybrid electric vehicles (PHEVs), or power storage systems.

The outer shape of the lithium secondary battery of the present invention is not particularly limited, but may be a cylindrical shape using a can, a prismatic shape, a pouch shape, or a coin shape.

The lithium secondary battery according to the present invention may not only be used in battery cells as a power source for small devices, but also be preferably used as a unit cell in mid- and large-sized battery modules including a plurality of battery cells.

Hereinafter, the present invention will be described in detail through examples.

The examples according to the present invention may be modified into various other forms, and the scope of the present invention should not be construed as being limited to the following examples described in detail. The examples of the present invention are provided in order to more completely explain the present invention to those with average knowledge in the art.

Hereinafter, the present invention will be described in detail through specific examples.

### Examples

### Example 1

### (Preparation of non-aqueous electrolyte)

An organic solvent was prepared by mixing ethylene carbonate (EC) and ethyl methyl carbonate (EMC) in a volume ratio of 30:70.

As a lithium salt, LiPF₆ was dissolved in the organic solvent to a molar concentration of 1.0 M.

In addition, a non-aqueous electrolyte was prepared by adding the compound represented by Chemical Formula 1-1, vinylene carbonate, 1,3-propane sultone, and ethylene sulfate to the organic solvent in which the lithium salt was dissolved.

The compound represented by Chemical Formula 1-1 was included in an amount of 0.5 wt% in the non-aqueous electrolyte. The vinylene carbonate was included in an amount of 1 wt% in the non-aqueous electrolyte. The 1,3-propane sultone was included in an amount of 0.5 wt% in the non-aqueous electrolyte. The ethylene sulfate was included in an amount of 1 wt% in the non-aqueous electrolyte.

### (Manufacture of secondary battery)

A positive electrode active material (LiNi_{0.85}Co_{0.85}Mn_{0.07}Al_{0.03}O₂), a conductive material (carbon nanotubes), and a binder (polyvinylidene fluoride) were added in a weight ratio of 97.5:1.0:1.5 to a solvent, N-methyl-2-pyrrolidone (NMP), to prepare a positive electrode mixture slurry (75 wt% solid content). The positive electrode mixture slurry was applied on one side of a positive electrode current collector (Al thin film) with a thickness of 15 µm at a loading amount of 4.1 mAh/cm², dried and roll pressed to prepare a positive electrode (positive electrode active material thickness: 130 µm).

A negative electrode active material, styrene-butadiene rubber (SBR) as a binder, carbon black as a conductive material, and carboxymethylcellulose (CMC) as a thickener were added in a weight ratio of 96:2:1:1 to a solvent, water, to prepare a negative electrode slurry. The negative electrode active material was a mixture of SiO (average particle diameter (D₅₀): 7 µm) as a silicon-based active material and graphite (average particle diameter (D₅₀): 18 µm) as a carbon-based active material at a weight ratio of 6:94. The negative electrode slurry was applied on a copper (Cu) thin film, which is a negative electrode current collector with a thickness of 6 µm, at a loading amount of 4.3 mAh/cm², dried and roll pressed to prepare a negative electrode (negative electrode active material thickness: 140 µm).

An electrode assembly was manufactured by sequentially stacking the positive electrode, a polyolefin-based porous separator, and the negative electrode.

After accommodating the manufactured electrode assembly in a battery case, the prepared non-aqueous electrolyte was injected to manufacture a lithium secondary battery.

### Example 2

A non-aqueous electrolyte and a lithium secondary battery were manufactured in the same manner as in Example 1, except that 0.5 wt% of the compound represented by Chemical Formula 1-2 was added to the non-aqueous electrolyte instead of the compound represented by Chemical Formula 1-1.

### Example 3

A non-aqueous electrolyte and a lithium secondary battery were manufactured in the same manner as in Example 1, except that 0.5 wt% of the compound represented by Chemical Formula 1-3 was added to the non-aqueous electrolyte instead of the compound represented by Chemical Formula 1-1.

### Example 4

A non-aqueous electrolyte and a lithium secondary battery were manufactured in the same manner as in Example 1, except that 0.5 wt% of the compound represented by Chemical Formula 1-4 was added to the non-aqueous electrolyte instead of the compound represented by Chemical Formula 1-1.

### Example 5

A non-aqueous electrolyte and a lithium secondary battery were manufactured in the same manner as in Example 1, except that 0.1 wt% of the compound represented by Chemical Formula 1-1 was added to the non-aqueous electrolyte.

### Example 6

A non-aqueous electrolyte and a lithium secondary battery were manufactured in the same manner as in Example 1, except that 5 wt% of the compound represented by Chemical Formula 1-1 was added to the non-aqueous electrolyte.

### Comparative Example 1

A non-aqueous electrolyte and a lithium secondary battery were manufactured in the same manner as in Example 1, except that the compound represented by Chemical Formula 1-1 was not added.

### Comparative Example 2

A non-aqueous electrolyte and a lithium secondary battery were manufactured in the same manner as in Example 1, except that 0.5 wt% of the compound (a=20) represented by Chemical Formula 3 below was added to the non-aqueous electrolyte instead of the compound represented by Chemical Formula 1-1.

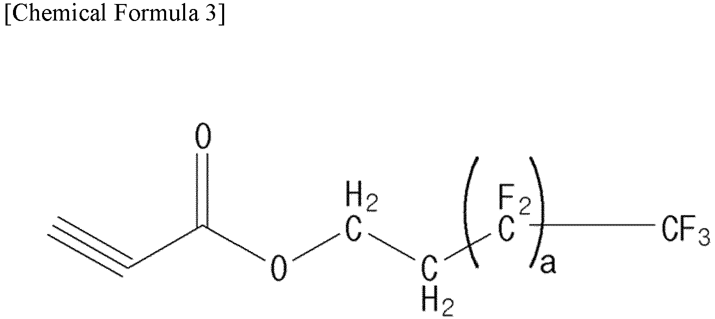

### Comparative Example 3

A non-aqueous electrolyte and a lithium secondary battery were manufactured in the same manner as in Example 1, except that 0.5 wt% of the compound represented by Chemical Formula 4 below was added to the non-aqueous electrolyte instead of the compound represented by Chemical Formula 1-1.

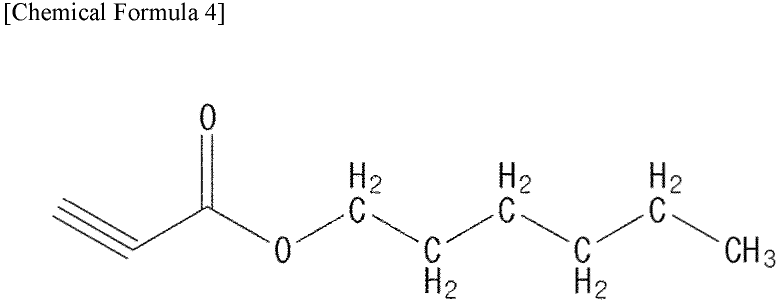

### Comparative Example 4

A non-aqueous electrolyte and a lithium secondary battery were manufactured in the same manner as in Example 1, except that 0.5 wt% of the compound represented by Chemical Formula 5 below was added to the non-aqueous electrolyte instead of the compound represented by Chemical Formula 1-1.

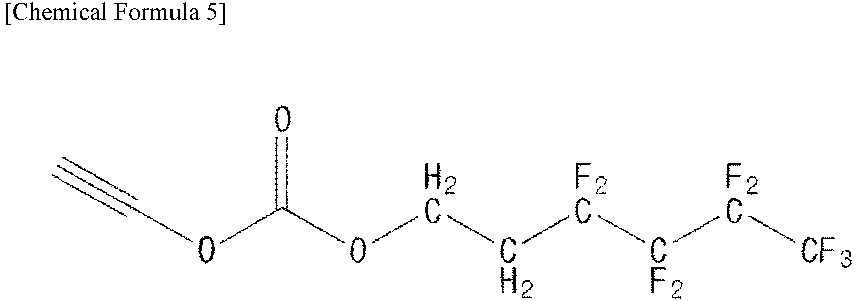

### Experimental Examples

### Experimental Example 1: Evaluation of initial capacity and capacity retention rate during storage at high temperature

The lithium secondary batteries of Examples 1 to 6 and Comparative Examples 1 to 4 manufactured above were charged to 4.2 V and 0.05 C under conditions of CC/CV at 1/3 C and 25 °C and discharged to 2.5 V under conditions of CC at 1/3 C to perform initial charging and discharging, and then the batteries were charged to 4.2 V and 0.05 C under conditions of CC/CV at 1/3 C and 25 °C and stored at 60 °C for 12 weeks. After the storage, the batteries were charged to 4.2 V and 0.05 C under conditions of CC/CV at 1/3 C and 25 °C and discharged to 2.5 V under conditions of CC at 1/3 C to measure the capacity during discharging.

The capacity retention rate was evaluated according to the equation below, and results thereof are shown in Table 1. Capacity retention rate (%) = (Discharge capacity after 12-week storage / Initial discharge capacity) × 100

### Experimental Example 2: Evaluation of initial resistance and resistance increase rate during storage at high temperature

The lithium secondary batteries of Examples 1 to 6 and Comparative Examples 1 to 4 manufactured above were initially charged and discharged in the same manner as in Experimental Example 1, and after checking the capacity at room temperature, the batteries were charged to 50% SOC based on the discharge capacity and discharged for 10 seconds at 0.33 C, at this time, the resistance was measured using the voltage drop difference and used as the initial resistance, and after 12-week storage at 60 °C, the resistance was measured in the same manner and designated as the final resistance, and the resistance increase rate was calculated using the equation below. The results thereof are shown in Table 1 below. Resistance increase rate (%) = (Final resistance - Initial resistance) / (Initial resistance) × 100

### Experimental Example 3: Evaluation of the volume increase rate during storage at high temperature

The lithium secondary batteries of Examples 1 to 6 and Comparative Examples 1 to 4 manufactured above were initially charged and discharged in the same manner as in Experimental Example 1, and after adjusting the SOC to 50% based on the discharge capacity, the volume of each battery was measured and designated as the initial volume, and after 12-week storage at a high temperature of 60 °C and 100% SOC, the volume was measured and designated as the final volume, and the volume increase rate was calculated using the equation below. The results thereof are shown in Table 1 below. Volume increase rate (%) = (Final volume - Initial volume) / (Initial volume) × 100

**[Table 1]**

| | Experimental Example 1 | | Experimental Example 2 | | Experimental Example 3 |
|---|---|---|---|---|---|
| | Initial capacity (mAh) | Capacity retention rate (%) | Initial resistance (mQ) | Resistance increase rate (%) | Volume increase rate (%) |
| Example 1 | 1,554.7 | 94.6 | 45.6 | 11.7 | 9.8 |
| Example 2 | 1,552.5 | 94.4 | 46.1 | 12.2 | 12.1 |
| Example 3 | 1,540.4 | 93.9 | 48.2 | 17.6 | 16.7 |
| Example 4 | 1,520.1 | 92.1 | 47.6 | 18.3 | 15.9 |
| Example 5 | 1,538.9 | 93.6 | 45.2 | 21.8 | 14.3 |
| Example 6 | 1,532.7 | 94.2 | 46.1 | 19.2 | 18.1 |
| Comparative Example 1 | 1,550.2 | 90.1 | 49.3 | 20.1 | 23.6 |
| Comparative Example 2 | 1,504.8 | 91.3 | 55.4 | 31.1 | 21.4 |
| Comparative Example 3 | 1,532.6 | 89.9 | 48.1 | 24.6 | 18.2 |
| Comparative Example 4 | 1,490.2 | 92.6 | 60.1 | 38.2 | 32.1 |

Referring to Table 1, it can be seen that lithium secondary batteries of Examples 1 to 6 according to the present invention exhibited excellent lifetime performance and had a low resistance increase rate and a low volume increase rate compared to Comparative Examples 1 to 4.

## Claims

1. A lithium secondary battery comprising:
a negative electrode;
a positive electrode;
a separator; and
a non-aqueous electrolyte,
wherein the negative electrode includes a negative electrode active material,
the negative electrode active material includes a silicon-based active material,
the non-aqueous electrolyte includes a lithium salt, an organic solvent, and an additive, and
the additive includes a compound represented by Chemical Formula 1 below: 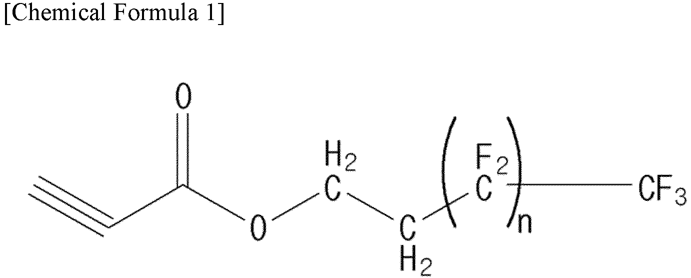
in Chemical Formula 1,
n is an integer from 0 to 18.

2. The lithium secondary battery of claim 1, wherein in Chemical Formula 1, n is an integer from 1 to 10.

3. The lithium secondary battery of claim 1, wherein in Chemical Formula 1, n is an integer from 2 to 8.

4. The lithium secondary battery of claim 1, wherein the compound represented by Chemical Formula 1 includes at least one selected from the group consisting of compounds represented by Chemical Formulas 1-1 to 1-4 below:

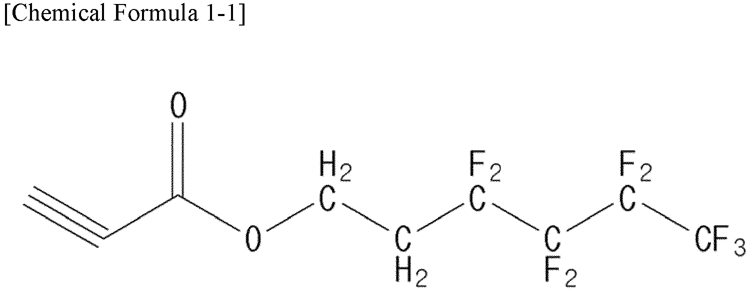

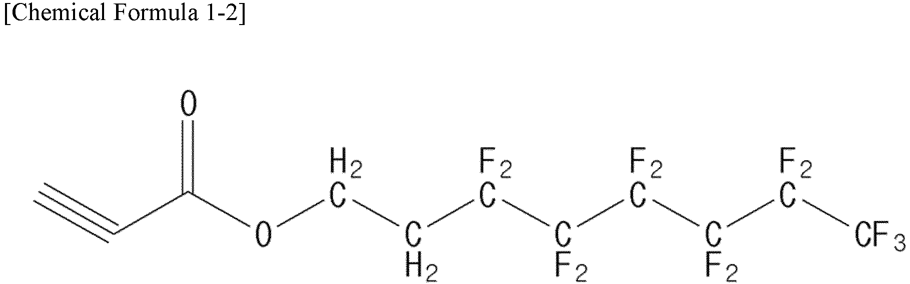

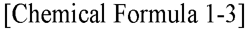

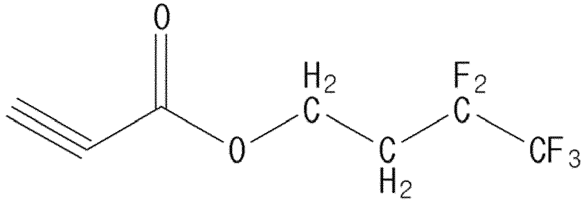

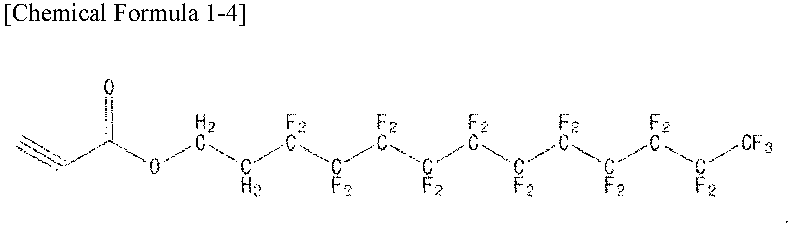

5. The lithium secondary battery of claim 1, wherein the compound represented by Chemical Formula 1 is included in the non-aqueous electrolyte in an amount of 0.05 wt% to 8 wt%.

6. The lithium secondary battery of claim 1, wherein the additive includes at least one additional additive selected from the group consisting of a halogen-substituted or unsubstituted carbonate-based compound, a sultone-based compound, a sulfate-based compound, a phosphate-based or phosphite-based compound, a borate-based compound, a nitrile-based compound, an amine-based compound, a silane-based compound, and a lithium salt-based compound.

7. The lithium secondary battery of claim 1, wherein the organic solvent includes a cyclic carbonate-based organic solvent and a linear carbonate-based organic solvent.

8. The lithium secondary battery of claim 1, wherein the silicon-based active material includes a compound represented by Chemical Formula A below:
[Chemical Formula A] SiOx (0 ≤ x < 2).

9. The lithium secondary battery of claim 1, wherein the negative electrode active material further includes a carbon-based active material.

10. The lithium secondary battery of claim 9, wherein a weight ratio of the silicon-based active material and the carbon-based active material is 1:99 to 30:70.
